Europäisches Patentamt

European Patent Office

Office européen des brevets

(11) Numéro de publication: **0 511 915 B1**

# (12) FASCICULE DE BREVET EUROPEEN

(45) Date de publication du fascicule du brevet: **13.12.95**

(21) Numéro de dépôt: **92401211.5**

(22) Date de dépôt: **28.04.92**

(51) Int. Cl.⁶: **E21B 47/12**, H04L 25/49, H04B 3/00

(54) **Procédé et dispositif pour augmenter les débits de transmission de signaux sur des câbles de puits multi-fonctions**

(30) Priorité: **29.04.91 FR 9105375**

(43) Date de publication de la demande:
**04.11.92 Bulletin 92/45**

(45) Mention de la délivrance du brevet:
**13.12.95 Bulletin 95/50**

(84) Etats contractants désignés:
**DE GB IT NL**

(56) Documents cités:
**EP-A- 0 025 895**
**EP-A- 0 398 581**

(73) Titulaire: **INSTITUT FRANCAIS DU PETROLE**
**4, Avenue de Bois Préau**
**F-92502 Rueil-Malmaison (FR)**

(72) Inventeur: **Beauducel, Claude**
**8, rue Talon**
**F-60119 Henonville (FR)**
Inventeur: **Cretin, Jacques**
**9, avenue de Villars,**
**Parly 2**
**F-78150 Le Chesnay (FR)**
Inventeur: **Saussier, Daniel**
**12, rue Fontaine St Martin**
**F-78560 Le Port Marly (FR)**

Rank Xerox (UK) Business Services
(3.10/3.09/3.3.3)

## Description

La présente invention concerne un procédé et un dispositif pour optimiser le débit d'informations transitant par un câble multi-fonctions tel par exemple que ceux qui relient un outil de puits à une installation de surface.

Lorsque l'on désire effectuer des mesures et/ou interventions dans des puits, on utilise généralement des outils que l'on descend au bout d'un câble multi-fonctions tel qu'un câble dit de logging qui est capable de supporter des efforts de traction et comporte plusieurs lignes permettant la transmission d'énergie électrique vers les outils de fond et des échanges de signaux de commande et de mesure entre lui et une installation de surface.

Les outils de fond sont constitués par exemple d'une ou plusieurs sondes qui peuvent être bloquées dans le puits par ouverture de bras d'ancrage sous l'action de vérins hydrauliques. L'énergie hydraulique est fournie par un générateur hydraulique de fond alimenté électriquement depuis une source en surface par des lignes d'alimentation incluses dans le câble. Par ces lignes également, on relie la source électrique en surface à des moteurs électriques ou des moyens électromagnétiques disposés dans les outils. D'autres lignes du câble servent à la transmission vers les outils de signaux de commande et en retour, à la transmission de signaux de mesure à un dispositif d'enregistrement en surface.

Différentes sondes de puits sont décrites dans les brevets US 4,428,422, 4,616,703, 4,862,425, 4,901,289.

Il existe de nombreuses applications où le nombre de capteurs de mesure contenus dans un équipement de puits est important. C'est le cas notamment dans le domaine de la prospection sismique de puits où l'on emploie un ensemble de capteurs tels que des géophones qui peuvent être répartis dans une sonde principale et éventuellement dans une ou plusieurs sondes satellites à des niveaux de profondeur différents. Les signaux captés doivent être transmis à un appareil d'enregistrement en surface. Le nombre de capteurs et la fréquence des signaux reçus justifient généralement leur transmission sous forme numérisée et codée avec un débit de transmission important.

En général, la bande passante des lignes de transmission incluses dans le câble, est relativement faible. Quand le débit de données à transmettre devient suffisamment grand, les performances limitées des lignes constituent un frein ce qui oblige à prévoir des mémoires-tampons importantes dans les systèmes électroniques des outils.

Le câble multi-fonctions le plus couramment employé pour les application pétrolières par exemple, comporte une ligne centrale, une pluralité de lignes disposées en couronne et une gaîne métallique extérieure.

Par le brevet FR 2 613 159, on connait un procédé pour améliorer le débit de données pouvant transister par un tel câble, ce procédé comportant essentiellement la transmission entre la ligne centrale et la gaîne extérieure, de données codées suivant un code bipolaire tel que le code HDB3 bien connu des spécialistes. Avec un tel agencement, on arrive à atteindre facilement des débits de plus de 100 kilobits/seconde (kb/s) sur des distances de plusieurs kilomètres, voire même de plus de 200 kb/s en optimisant les facteurs de transmission.

L'évolution actuelle des équipements de mesure dans les puits rend de plus en plus nécessaire d'augmenter encore les débits de transmission pour faire face à l'accroîssement du flot des données à transmettre vers les installations de surface.

Une solution classique employée dans le domaine des télécommunications consisterait à employer des câbles avec une bande passante plus large. Ce n'est pas possible pour les transmissions dans les puits où on doit utiliser le câble standard généralement disponible sur les sites.

Par la demande de brevet EP 398 581 on connait un système de transmission sur câble de logging qui utilise un codage multi-niveaux pour augmenter le débit de transmission.

Ce système comporte un ensemble de correction de ligne permettant de restituer aux signaux codés, en bout de ligne, avant décodage et démodulation, les niveaux d'amplitude corrects qui ont pu être altérés en raison des imperfections de la ligne, en séparant les différents canaux empruntant la même ligne. L'ensemble en question comporte notamment un filtre pour sélectionner dans les signaux reçus, une certaine bande de fréquence dont la largeur est choisie pour que les données sous forme analogique, soit dans la bande passante permise pour la ligne et n'interfère pas avec les signaux adjacents transmis sur la même ligne à des fréquences différentes.

Par la demande de brevet EP 25 895, on connait un dispositif électronique à montage symétrique permettant de générer des impulsions avec un débit élevé.

Le procédé selon l'invention permet de s'affranchir des limitations imposées par les câbles multi-fonctions existants (câbles de logging) et d'optimiser les débits de transmission des signaux sur des lignes de transmission incluses dans lesdits câbles pour obtenir les débits élevés nécessaires à la transmission des volumes de données recueillis par les capteurs dans les équipements de puits les plus récents, sans modification du taux d'erreur de transmission admissible. Il comporte le codage des données numérisées à transmettre par des tensions électriques choisies parmi un ensemble de tensions de codage comportant au moins deux tensions de niveaux constants bien définis.

Il est caractérisé en ce qu'il comporte :
- l'élargissement vers les hautes fréquences de la bande passante de chaque ligne de transmission utilisée par combinaison avec des circuits de correction choisis pour que la fonction de transfert de la ligne corrigée soit sensiblement celle d'un filtre de référence tel qu'un filtre de type Bessel, dans un intervalle de fréquence de part et d'autre de la fréquence de coupure à trois décibels (fc) de la ligne corrigée, la fréquence de la borne supérieure dudit intervalle étant proportionnelle à cette fréquence de coupure, le coefficient de proportionnalité ($k_1$) étant supérieur à 2 et ladite fréquence de coupure fc de la ligne corrigée étant choisie en fonction du nombre de tensions de codage dudit ensemble et du taux d'erreur admissible.

On choisit par exemple des circuits de correction tels que la fonction de transfert de chaque ligne corrigée, corresponde sensiblement à celle d'un filtre de Bessel au moins dans un intervalle de fréquence ($k_2$fc et $k_1$fc) où fc est ladite fréquence de coupure fc, et $k_1$ est un facteur multiplicatif au moins égal à 2,5 et $k_2$ est un facteur multiplicatif de l'ordre de 0,2.

Suivant un mode de réalisation, on sélectionne des circuits de transmission adaptés à appliquer aux signaux dans ledit intervalle de fréquence un gain au plus égal à une valeur limite diminuant corrélativement avec une augmentation du nombre choisi de tensions de codage, pour un taux d'erreurs fixé et dépendant du niveau de bruit ramené par lesdits circuits de correction associés à chaque ligne de transmission, et l'on sélectionne ladite fréquence de coupure (fc) dont dépend la fréquence de transmission maximale, pour que le relèvement d'amplitude à appliquer aux signaux transmis sur chaque ligne de transmission, soit au plus égal à ladite valeur limite (G).

Suivant un exemple de réalisation préféré, on peut augmenter encore le débit de transmission en codant les signaux à transmettre en employant une technique connue de codage multi-niveaux, à l'aide d'un ensemble de tensions de codage comportant huit ou seize tensions de codage, par exemple.

Par cette adjonction de circuits de filtrage particuliers et cet élargissement contrôlé de la bande passante et ce codage à tensions multiples, on peut arriver à augmenter d'un facteur 3 ou 4 le débit possible de transmission des câbles multifonctions les plus courants, et ceci sans augmentation du taux d'erreur de transmission. On peut ainsi atteindre des débits de transmission largement supérieurs à 1 Mbits/s.

Le dispositif de mise en oeuvre du procédé comporte un ensemble de codage adapté à coder des signaux numérisés à transmettre avec un nombre choisi de tensions de codage et à les appliquer sur une ligne de transmission, il est caractérisé en ce qu'il comporte des circuits de filtrage adaptés pour que la ligne combinée avec lesdits circuits de filtrage, ait une fonction de transfert de préférence semblable à celle d'un filtre de Bessel de fréquence de coupure fc choisie en fonction du nombre de tensions de codage utilisé, de la fonction de transfert de la ligne de transmission seule et des caractéristiques de bruit desdits circuits de filtrage, dans un intervalle de fréquence s'étendant de part et d'autre de ladite fréquence de coupure fc.

D'autres caractéristiques et avantages du procédé et du dispositif selon l'invention apparaîtront mieux à la lecture de la description ci-après de modes de réalisation décrits à titre d'exemples non limitatifs, en se référant aux dessins annexés où :
- la Fig.1 montre une sonde descendue dans un puits, suspendue à un câble électro-porteur du type câble de logging par exemple;
- la Fig.2 montre schématiquement en coupe la disposition des conducteurs courant le long d'un câble électro-porteur d'un type courant;
- les Fig.3 à 6 montrent schématiquement différents modes de combinaisons des conducteurs d'un câble permettant de constituer une ou plusieurs lignes de transmission;
- la Fig.7 montre la variation avec la fréquence, de la fonction de transfert d'une ligne de transmission incluse dans un câble multifonctions tel qu'un câble de logging d'un type courant d'une longueur de plusieurs kilomètres;
- les Fig.8 et 9 montrent deux dispositions relatives de la fonction de transfert d'une ligne de transmission par rapport à celle du filtre de Bessel équivalent à la même ligne corrigée, respectivement dans le cas d'un codage à deux tensions ou bipolaire et dans le cas d'un codage à 8 tensions, les dispositions relatives étant, dans les deux cas, choisies pour obtenir un débit maximal sans augmenter le taux d'erreur de transmission;
- la Fig.10 montre un exemple de courbe de réponse d'un circuit correcteur associé à une ligne de transmission du câble multi-fonctions, mettant en évidence le gain et la bande de bruit centrée sur le gain maximal et large de quelques 200 kHz.
- la Fig.11 montre un ensemble de tensions de codage à deux tensions de codage symétriques;
- la Fig.12 montre un ensemble de tensions de codage à huit tensions positives ou négatives; et

- la Fig.13 montre schématiquement un exemple de système de transmission pour appliquer des signaux codés suivant un code multi-niveaux entre deux conducteurs d'un câble électro-porteur;

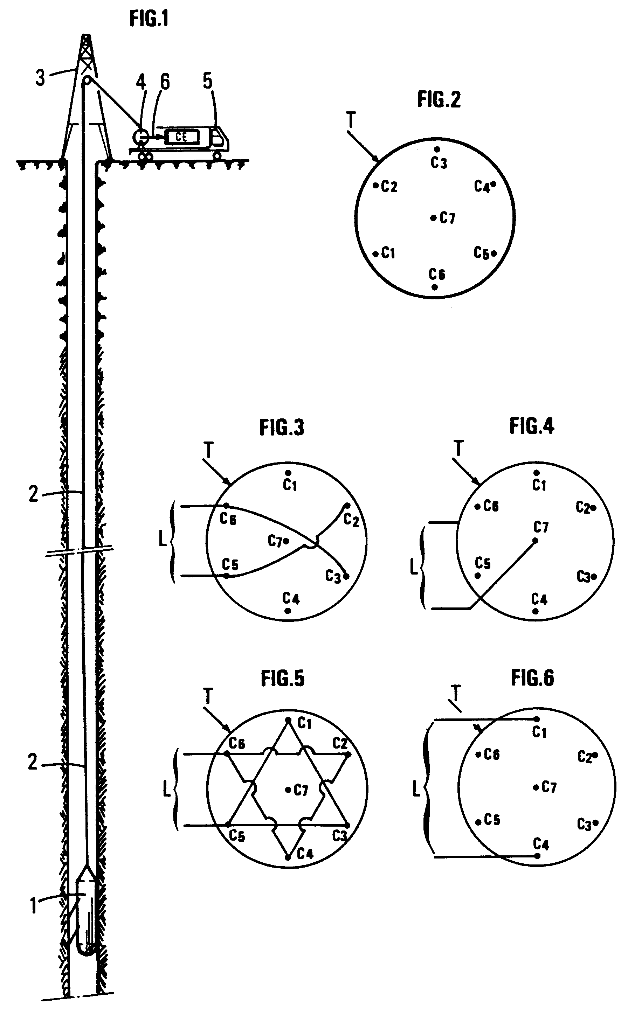

Le procédé selon l'invention permet la transmission de signaux échangés entre un système de commande et d'enregistrement CE et un ensemble de réception de signaux contenu dans au moins une sonde 1 (Fig. 1) qui est par exemple du type décrit dans les brevets US précités. Cette sonde est suspendue par un câble électro-porteur 2 à une structure de support 3 disposée en surface et s'enroule sur le touret de stockage 4 d'un camion laboratoire 5. Le câble 2 utilisé est celui qui sert généralement pour descendre les sondes de puits. Il comporte par exemple (Fig. 2) sept conducteurs $C_1$ à $C_7$. Les six conducteurs $C_1$ à $C_6$ sont disposées régulièrement dans la section du câble à une même distance du centre où passe un conducteur central $C_7$. A la périphérie, le câble comporte une gaine métallique T constituée généralement d'une tresse. Les sept conducteurs $C_1$ à $C_7$ du câble 1 enroulé sur le touret de stockage 4 (Fig. 1), sont connectées par un câble de transmission 6 au système de commande et d'enregistrement CE disposé dans le camion laboratoire 5.

Les données à transmettre sont appliquées à une ligne de transmission L obtenue en combinant des conducteurs du câble. Suivant le mode de combinaison de la Fig.3, cette ligne est obtenue en interconnectant $C_2$ et $C_5$ d'une part et $C_3$ et $C_6$ d'autre part. On peut aussi appliquer les signaux entre le conducteur central $C_7$ et la tresse T ou bien encore entre deux conducteurs tels que $C_1$ et $C_4$ par exemple (Fig.6).

La ligne peut encore être constituée (Fig.5) par des interconnexions triangulaires des conducteurs, $C_1$, $C_3$ et $C_5$ d'une part et $C_2$, $C_4$ et $C_6$ d'autre part.

Une telle sonde éventuellement complétée par une ou plusieurs sondes satellites en chapelet, est descendue dans des puits souvent à des profondeurs de plusieurs kilomètres (entre 3 et 7 km voire plus).

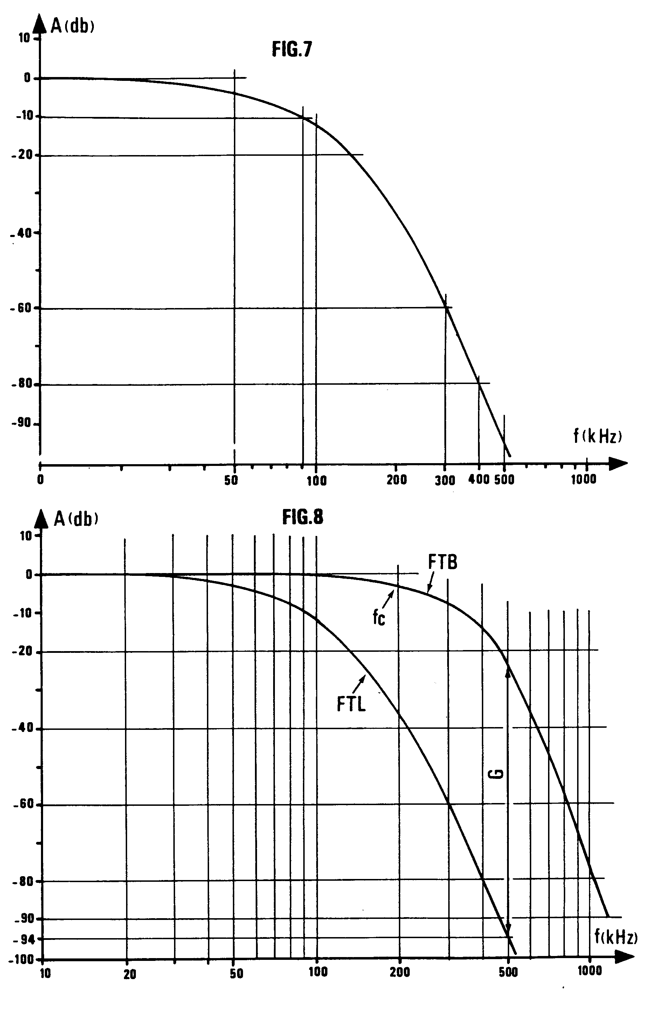

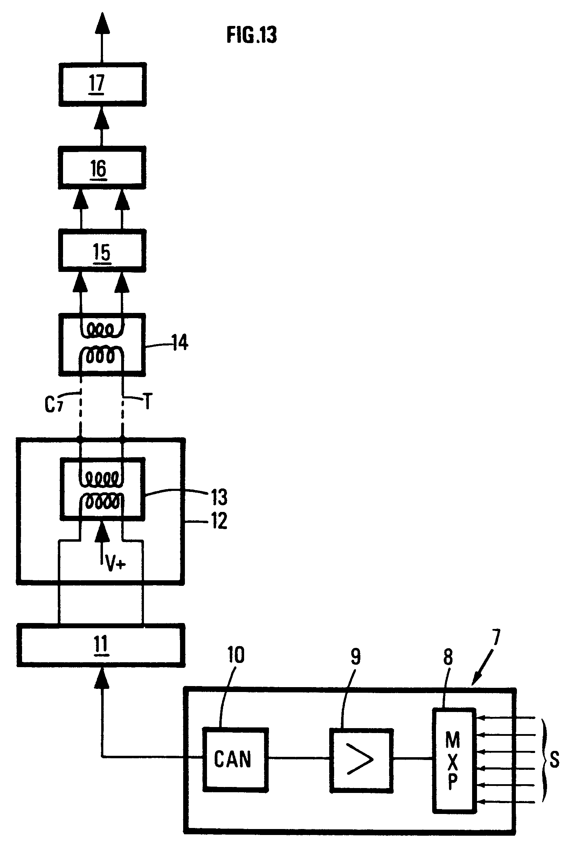

La fonction de transfert représentée à titre d'exemple sur la Fig.7, est celle d'un câble de logging de plusieurs Km d'un type courant. Elle présente une atténuation proche de 30 dB vers 100 KHz et supérieure à 50 dB vers 200 KHz. Il en résulte que le débit de transmission sur une distance de plusieurs kilomètres ne peut dépasser quelques centaines de Kilobits/sec (généralement 100 à 200 Kb/s) quand on utilise un mode de codage bipolaire tel que le code HDB3 bien connu des spécialistes. Suivant ce mode de codage, on utilise deux tensions d'amplitude symétriques, l'une positive de +V Volt, l'autre négative de -V Volt (Fig.11).

L'optimisation permise par le procédé selon l'invention, comporte tout d'abord l'adoption d'un mode de codage multi-niveaux. On choisit par exemple un ensemble de 2, 4, 8, 16 ou 32 tensions de codage symétriques deux à deux de part et d'autre de la tension 0 Volt. Le mode de codage à 2 niveaux est un mode bi-polaire tel que le code HDB3 mentionné précédemment. Pour un codage à 8 niveaux, on subdivise en quatre chacune des tensions sysmétriques +V et -V disponibles dans l'appareil de codage. Les tensions de codage ont de ce fait pour amplitudes respectivement $V1 = +V$, $V2 = 0,75V$, $V3 = +0,5V$, $V4 = +0,25V$, $V5 = -0,25V$, $V6 = -0,5V$, $V7 = -0,75V$ et $V8 = -V$. Avec cet ensemble de codage à 8 niveaux (Fig.12), il est connu que l'on peut transmettre jusqu'à 3 bits simultanément et donc accroître le débit de transmission possible sans augmenter la bande passante.

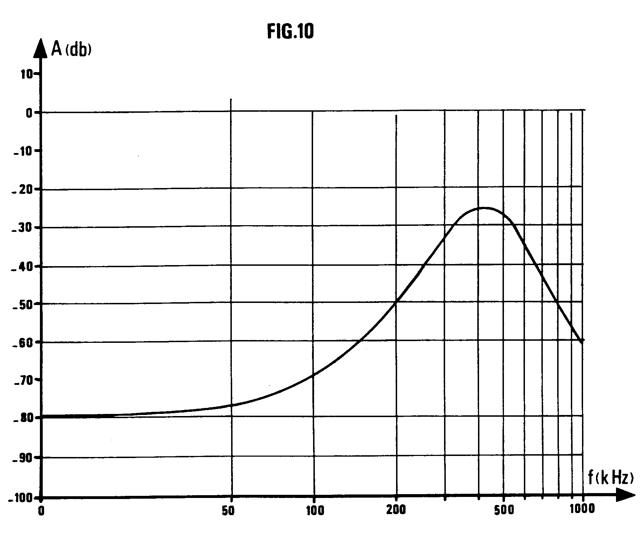

A ces tensions de codage, se superposent des tensions de bruit vb provenant des circuits de correction (Fig. 10 à 12) d'autant plus élevées que la bande passante des circuits est plus large et leur gain plus élevé. L'effet de masque de ces bruits parasites est plus sensible sur les tensions de codage les plus faibles i.e V5 et V6 (Fig.12) et donc, pour un même taux d'erreurs admissible, le passage d'un codage bipolaire (Fig.11) à un codage à huit tensions (Fig.12), oblige à diminuer la fréquence de coupure du système corrigé.

Si $a1 = S/B$ est le rapport du signal au bruit en code bipolaire il est nécessaire, pour un codage à 4 tensions, de se fixer un rapport admissible plus élevé $a2 = a1 + c$, c étant un écart que l'on fixe à 6 dB si l'on veut garger le même pouvoir séparateur entre les niveaux. Pour un codage à 8 et 16 tensions, on se fixe respectivement une valeur $a3 = a1 + 2c$ et $a4 = a1 + 3c$.

Le procédé selon l'invention comporte l'adjonction à chaque ligne de transmission d'un réseau de correction particulier qui élargit la bande passante de chaque ligne tout en évitant les risques de suroscillation des signaux qui génère généralement des erreurs au décodage.

On a trouvé que le réseau de correction permettant l'optimisation des lignes, doit être choisi pour que la ligne corrigée ait de préférence une fonction de transfert équivalente à celle d'un filtre de Bessel au moins dans un certain intervalle de fréquence $(k_2 fc, k_1 fc)$ autour de la fréquence de coupure fc à trois décibels du filtre de Bessel équivalent à la ligne corrigée $k_1$ et $k_2$ étant des coefficients multiplicatifs. Le coefficient $k_2$ est de l'ordre de 0,2 par exemple. Le coefficient $k_1$ est choisi au moins égal à 2 et de préférence au moins égal à 2,5.

Le procédé comporte aussi la sélection de cette fréquence de coupure fc en fonction des paramètres de la transmission. L'amplitude de bruit bs admissible à la sortie du réseau correcteur étant fixée en fonction du nombre choisi de tensions de codage, et l'amplitude de bruit ramenée à l'entrée par ce même réseau, vont permettre de déterminer le gain maximal qu'il doit appliquer aux signaux transmis dans la bande de fréquence $(k_2 fc, k_1 fc)$ et donc la fréquence de coupure fc maximale qu'il est possible d'obtenir avec les lignes de transmission employées.

La tension de bruit ramenée à l'entrée d'un réseau correcteur s'exprime généralement en nV (nanovolt) BF, où BF est la largeur de la bande de fréquence à amplifier. La bande de fréquence maximale BF étant fixée, on en déduit donc le bruit total ramené be. Le gain maximal G que l'on doit donner au réseau de correction s'obtient donc par le rapport bs/be.

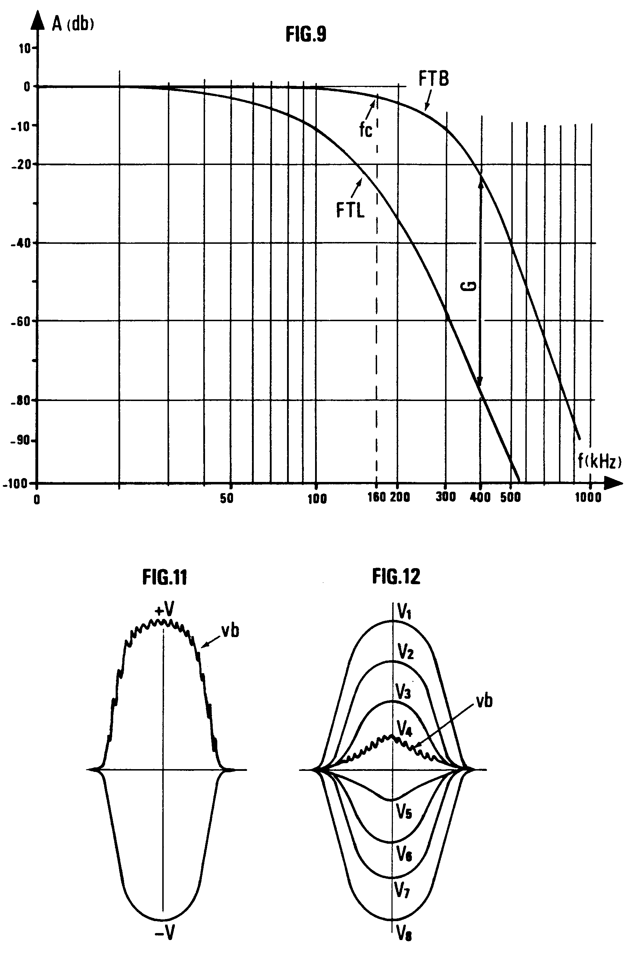

Le gain G étant imposé, on peut donc sélectionner la fréquence de coupure fc du filtre de Bessel équivalent pour que, quelle que soit la fréquence comprise dans l'intervalle $(k_2 fc, k_1 fc)$ le relèvement d'amplitude à appliquer aux signaux soit au plus égal à G (Fig.8, 9). La fréquence de transmission maximale Fm possible est proportionnelle à la fréquence fc obtenue : $Fm = k.fc$ avec un coefficient k de l'ordre de 2,2 par exemple. On en dédit le débit Dm par la relation $Dm = Fm \log_2 n$ où N est le nombre de niveaux de codage.

L'examen ci-après d'un exemple particulier de réalisation, va permettre de chiffrer les résultats obtenus dans la pratique avec le procédé selon l'invention. On utilise un câble de transmission où les lignes ont une fonction de transfert FTC telle que celle représentée à la Fig. 7. Le rapport S/bs du signal au bruit est fixé par exemple à 40 dB pour un code bipolaire à deux tensions, à 52 dB, 58dB et 64 dB respectivement pour un codage à 8, 16 et 32 tensions, le bruit be ramené à l'entrée des circuits de correction de ligne utilisés est par exemple de 5(nV) BF(Hz), la bande de fréquence à amplifier est de l'ordre de 250 KHz et l'amplitude du signal S est fixée à 1 V par exemple.

Avec les valeurs numériques ci-dessus, on calcule l'amplitude be qui est égale à 2,5 micro-Volt, les amplitudes bs maximales compte-tenu des valeurs des rapports S/bs imposés et l'on en déduit que les gains G à appliquer sont de 72 dB (Fig.8), 60 dB, 54 dB (Fig.9) et 48dB respectivement dans le cas de codages bipolaire, d'un codage à 8, 16 et 32 tensions de codage. Les écarts G entre la fonction de transfert de la ligne de transmission seule FTL et celle du filtre de Bessel équivalent FTB ayant été ainsi déterminés, on translate celle-ci par rapport à l'autre jusqu'à obtenir entre elles l'écart G à la fréquence $f2 = 2,5.fc$. Cette condition impose la fréquence de coupure fc recherchée. Pour un codage bipolaire, on trouve que fc est sensiblement égale à 200 KHz (Fig.8). Avec un codage à 8 tensions, fc est sensiblement égale à 160 KHz (Fig.9). On peut vérifier aussi que fc est de l'ordre de 150 KHz et de 120 KHz respectivement pour un codage à 16 et 32 tensions de codage.

En tenant compte du nombre de bits qu'il est possible de transmettre simultanément selon le nombre de tensions de codage employé, on vérifie que le débit Dm d'une telle ligne peut atteindre des valeurs optimales de l'ordre de 1,3 à 1,5 Mbits/s pour un codage à 16 ou 32 tensions de codage, et ceci sans aucune sur-oscillation susceptible d'amener des erreurs de décodage. On remarque que compte-tenu de la forme de la courbe de transfert des lignes utilisées, le débit optimal est le plus élevé pour des codages à 16 ou 32 niveaux et qu'une augmentation supplémentaire du nombre de tensions de cadage, ne procure aucune augmentation corrélative du débit possible.

Le dispositif de mise en oeuvre du procédé (Fig. 13) est adapté à la transmission de données numérisées délivrés par un système d'acquisition 7 comportant généralement un multiplexeur d'entrée 8 connectant séquentiellement à une chaine d'amplification et de filtrage 9 à gain variable telle que celles décrites dans les brevets US 4 779 055 ou 4 774 474, et un convertisseur analogique-numérique 10.

Les signaux numérisés issus du système d'acquisition sont appliqués à un ensemble de codage spécialisé 11 d'un type connu adapté au code de transmission et au nombre de tension de codage, avant d'être appliqué à un ensemble d'émission 12 lequel est connecté à une ligne du câble 2 obtenue par l'une des combinaisons schématisées aux Fig.3 à 6.

L'ensemble d'émission 12 comporte par exemple un transformateur de tension 13 avec un enroulement primaire dont les deux extrémités sont connectées à l'ensemble de codage 11.

L'enroulement secondaire du transformateur de tension 11 est connecté par exemple entre la ligne centrale $C_7$ et la tresse périphérique T. A l'autre extrémité du câble 2, un autre transformateur de tension 14 permet de prélever le signal transmis entre la ligne $C_7$ et la tresse T. Le signal à l'enroulement secondaire du transformateur 14 est appliqué à un ensemble correcteur 15 adapté tel que la ligne de transmission corrigée par les effets de cet ensemble ait une réponse seniblement identique à celle d'un filtre de Bessel au moins dans l'intervalle défini $(k_2 fc, k_1 fc)$. Les signaux issus de l'ensemble de filtrage 15 sont appliqués à un ensemble-récepteur 16 d'un type connu adapté à restituer les signaux numérisés et ensuite à un décodeur adapté 17 qui reconstitue le signal numérisé transmis.

L'ensemble du codage 11 est adapté à transmettre les signaux numérisés avec un débit au plus égal au débit maximal D compatible avec les paramètres du câbles et des circuits électroniques de l'ensemble de filtrage 15, comme on l'a vu dans le cours de la description.

**Revendications**

1. Procédé pour optimiser les débits de transmission des signaux sur des lignes de transmission incluses dans des câbles multi-fonctions (2) du type utilisés par exemple pour relier des outils de puits à des installations de surface sans modification du taux d'erreur de transmission admissible, comprenant le codage des signaux numérisés par des tensions électriques choisies parmi un ensemble de tensions de codage comportant au moins deux niveaux de tension bien définis et l'utilisation de moyens de filtrage, caractérisé en ce qu'il comporte :
   - l'élargissement vers les hautes fréquences de la bande passante de chaque ligne de transmission utilisée par combinaison avec des circuits de correction (15) choisis pour que la ligne corrigée ait une fonction de transfert équivalente à celle d'un filtre de Bessel au moins dans un certain intervalle de fréquence ($k_2 fc$, $k_1 fc$) autour de la fréquence de coupure fc à trois décibels du filtre de Bessel équivalent à la ligne corrigée, $k_1$ et $k_2$ étant des coefficients multiplicatifs, le coefficient $k_1$ étant choisi supérieur ou égal à 2 et ladite fréquence de coupure fc de la ligne corrigée étant choisie en fonction du nombre de niveaux de codage dudit ensemble de tensions et du taux d'erreur admissible.

2. Procédé selon la revendication 1, caractérisé en ce que $k_1$ est un facteur multiplicatif au moins égal à 2,5 et $k_2$, est un facteur multiplicatif de l'ordre de 0,2.

3. Procédé selon l'une des revendications 1 ou 2, caractérisé en ce que l'on sélectionne des circuits de correction permettant d'appliquer aux signaux dans ledit intervalle de fréquence, un gain au plus égal à une valeur limite (G) diminuant corrélativement avec une augmentation du nombre choisi de tensions de codage pour un taux d'erreurs de transmission fixé, et dépendant du niveau de bruit (be) ramené par lesdits circuits de correction associés à chaque ligne de transmission et l'on sélectionne ladite fréquence de coupure (fc) dont dépend la fréquence de transmission maximale, pour que le relèvement d'amplitude à appliquer aux signaux transmis sur chaque ligne de transmission, soit au plus égal à ladite valeur limite (G).

4. Procédé selon la revendication 1 ou 2, caractérisé en ce que l'on augmente le débit de transmission en codant les signaux à transmettre au moyen d'un ensemble de tensions de codage comportant au moins huit niveaux de tensions.

5. Procédé selon la revendication 1 ou 2, caractérisé en ce que l'on augmente le débit de transmission en codant les signaux à transmettre en choisissant un ensemble de tensions de codage comportant seize tensions de codage.

**Claims**

1. Method for optimising the transmission rates of signals on transmission lines incorporated in multi-purpose cables (2) of the type used to link well tools to surface installations, for example, without modifying the permissible transmission error rate, consisting in encoding digitised signals by electric voltages selected from a set of coding voltages having at least two specifically defined voltage levels and using filtering means, characterised in that it consists of:
   - a widening towards the higher frequencies of the passband of each transmission line in combination with the use of correcting circuits (15) selected so that the corrected line has a transfer function equivalent to a Bessel filter at least within a certain frequency range ($k_2 fc$, $k_1 fc$) around the three decibel cut-off frequency of the Bessel filter equivalent to the corrected line, $k_1$ and $k_2$ being multiplier coefficients, coefficient $k_1$ being selected so as to be greater than or equal to 2 and the said cut-off frequency fc of the corrected line being selected as a function of the number of coding levels of the voltage unit and the permissible error rate.

2. Method as claimed in claim 1, characterised in that $k_1$ is a multiplier factor equal to at least 2.5 and $k_2$ is a multiplier factor in the order of 0.2.

3. Method as claimed in one of claims 1 or 2, characterised in that correcting circuits are selected that will allow a gain to be applied to the signals within the said frequency range, that is at most equal to a threshold value (G), decreasing in proportion to an increase in the selected number of coding voltages for a fixed transmission error rate, and depending on the level of noise (be) occurring on the said correcting circuits linked with each transmission line, and the said cut-off frequency (fc), on which the maximum transmission frequency depends, is selected so that the increased amplitude to be applied to the signals transmitted on each transmission line is at most equal to the threshold value (G).

4. Method as claimed in claim 1 or 2, characterised in that the transmission rate is increased by coding the signals to be transmitted by means of a set of coding voltages having at least eight voltage levels.

5. Method as claimed in claim 1 or 2, characterised in that the transmission rate is increased by coding the signals to be transmitted by selecting a set of coding voltages having sixteen coding voltages.

**Patentansprüche**

1. Verfahren zum Optimieren der Übertragungsraten der Signale auf Übertragungsleitungen, die in Multifunktionskabeln (2) vom Typ, wie sie beispielsweise verwendet werden, um Bohrlochwerkzeuge mit Oberflächeninstallation ohne Modifikation des zulässigen Übertragungsfehlergrads zu verbinden, eingeschlossen sind, die Codierung der digitalisierten Signale durch elektrische Spannungen umfassend, die aus einer Gesamtheit von Codierungsspannungen gewählt wurden und wenigstens zwei wohl definierte Spannungsniveaus sowie die Verwendung von Filtermitteln umfassen, dadurch gekennzeichnet, daß es umfaßt:
   - die Verbreiterung, gegen höhere Frequenzen, des Durchlassbandes jeder verwendeten Übertragungsleitung durch Kombination mit Korrekturkreisen (15), die gewählt sind, damit die korrigierte Leitung eine Übertragungsfunktion äquivalent der eines Besselfilters wenigstens in einem gewissen Frequenzintervall $(k_2 fc,\ k_1 fc)$ um die Unterbrechungsfrequenz fc um drei Decibel des Besselfilters äquivalent der korrigierten Leitung hat, wobei $k_1$ und $k_2$ Multiplikationskoeffizienten sind und der Koeffizient $k_1$ größer oder gleich 2 gewählt ist und diese Trennfrequenz fc der korrigierten Leitung als Funktion der Anzahl der Codierungsniveaus dieser Gesamtheit von Spannungen und des zulässigen Fehlergrads gewählt ist.

2. Verfahren nach Anspruch 1, dadurch gekennzeichnet, daß $k_1$ ein Multiplikationsfaktor wenigstens von 2,5 und $k_2$ ein Multiplikationsfaktor in der Größendordnung von 0,2 ist.

3. Verfahren nach einem der Ansprüche 1 oder 2, dadurch gekennzeichnet, daß man Korrekturkreise wählt, die es ermöglichen, an die Signale in diesem Frequenzintervall eine Verstärkung anzulegen, die höchstens gleich einem Grenzwert (G) ist, der korrelativ mit einer Erhöhung der gewählten Anzahl von Codierungsspannungen für einen fixierten Übertragungsfehlergrad ist und vom Störniveau (be) abhängt, daß die durch diese jeder Übertragungsleitung zugeordneten Korrekturkreise zurückgeführt ist, und man diese Trennfrequenz (fc) auswählt, von der die maximale Übertragungsfrequenz abhängt, damit die Anhebung der Amplitude, die auf die auf jeder Übertragungsleitung zu übertragenden Signale angewendet wird, höchstens gleich diesem Grenzwert (G) ist.

4. Verfahren nach Anspruch 1 oder 2, dadurch gekennzeichnet, daß man die Übertragungsrate erhöht, indem man die zu übertragenden Signale vermittels einer Gesamtheit von Codierungsspannungen codiert, welche wenigstens acht Spannungsniveaus umfassen.

5. Verfahren nach Anspruch 1 oder 2, dadurch gekennzeichnet, daß man die Übertragungsrate erhöht, indem man die zu übertragenden Signale codiert und dabei eine Gesamtheit von Codierungsspannungen, welche sechzehn Codierungsspannungen umfassen, wählt.

EP 0 511 915 B1

FIG.1

FIG.2

FIG.3

FIG.4

FIG.5

FIG.6

**FIG.7**

**FIG.8**

**FIG.9**

**FIG.11**

**FIG.12**

EP 0 511 915 B1

FIG.10

11

EP 0 511 915 B1

**FIG.13**

12